# FASCICULE DE BREVET EUROPEEN

(11) **EP 2 490 091 B1**
(45) Date de publication et mention de la délivrance du brevet: **26.11.2014**
(21) Numéro de dépôt: 12154827.5
(22) Date de dépôt: 10.02.2012
(51) Int. Cl.: G05D 1/00

(54) **Procédé et dispositif pour le contrôle d'un aéronef en lacet**
Verfahren und Vorrichtung zur Gierkontrolle eines Luftfahrzeugs
Method and device for controlling the yaw of an aircraft

(30) Priorité: 15.02.2011 FR 1151225
(43) Date de publication de la demande: 22.08.2012
(73) Titulaire: Airbus Operations (S.A.S.), 31060 Toulouse (FR)
(72) Inventeur: Walter, Stéphane, 31490 BRAX (FR)
(74) Mandataire: Gevers France

(56) Documents cités:
- EP-A1- 1 160 158
- WO-A2-2007/048960
- DE-A1-102004 029 196

## Description

La présente invention concerne un procédé et un dispositif pour le contrôle d'un aéronef en lacet.

On sait que le contrôle en lacet d'un aéronef est principalement assuré par une gouverne de direction articulée, pouvant tourner dans deux sens de rotation opposés entre une position aérodynamiquement neutre et une position arrêtée de rotation maximale. A cet effet, la gouverne de direction est commandée par un organe de commande mobile (palonnier) à la disposition du pilote de l'aéronef. Cet organe est généralement muni de deux pédales dont les enfoncements respectifs engendrent le déplacement dudit organe dans deux directions opposées associées respectivement aux deux sens de rotation opposés de la gouverne de direction. En particulier, ce palonnier commande la rotation de la gouverne de direction de manière que l'amplitude de la rotation de ladite gouverne de direction dépende de l'amplitude du déplacement dudit palonnier. Dès lors, un enfoncement de la pédale de droite, par exemple, traduit la volonté du pilote d'engendrer un moment de lacet tendant à déplacer le nez de l'aéronef vers la droite, ce moment étant obtenu par un braquage à droite de la gouverne de direction. Ainsi, lorsque le pilote de l'aéronef souhaite corriger la trajectoire latérale de l'aéronef, il peut agir sur le palonnier en vue de faire intervenir la gouverne de direction.

On sait également qu'il peut être prévu, lorsque la vitesse d'un tel aéronef excède un seuil de vitesse de limitation, de limiter la rotation de la gouverne de direction de façon inversement proportionnelle à la vitesse de l'aéronef, dans le but de limiter les contraintes auxquelles ledit aéronef est soumis à grande vitesse et, ainsi, de permettre la réalisation de manoeuvres de lacet, y compris à grande vitesse.

Ainsi, lorsque la vitesse de l'aéronef est inférieure à ce seuil de vitesse de limitation, si le pilote déplace l'une des pédales du palonnier jusqu'à ce que soit atteinte l'une des positions arrêtées de rotation maximale de la gouverne de direction (dans l'un des deux sens de rotation de ladite gouverne), le palonnier a lui-même atteint une position arrêtée. En revanche, lorsque la vitesse de l'aéronef est au moins égale à ce seuil de vitesse de limitation, si le pilote déplace l'une des pédales du palonnier jusqu'à ce que soit atteinte l'une des positions arrêtées de rotation maximale de la gouverne de direction (dans l'un des sens de rotation de ladite gouverne), il lui est encore possible de déplacer le palonnier. Dans ce cas, le déplacement du palonnier par le pilote peut surpasser la position de celui-ci correspondant à la position arrêtée de rotation maximale de la gouverne de direction dans l'un des sens de rotation de ladite gouverne, et le pilote peut donc engendrer une sur-commande au niveau de ladite gouverne de direction.
Le document de l'art antérieur WO2007/048960 illustre un tel procédé de limitation d'un angle de braquage de la gouverne d'un aéronef.

On doit toutefois remarquer que, lorsque la vitesse de l'aéronef est supérieure à ce seuil de vitesse de limitation, si le pilote a préalablement déplacé l'une des pédales du palonnier de manière que le déplacement du palonnier surpasse la position de celui-ci correspondant à la position arrêtée de rotation maximale dans l'un des sens de rotation de la gouverne de direction, en vue de réaliser, en sur-commande, une manoeuvre de lacet dans ce même sens, il est possible que celui-ci souhaite subitement réaliser une manoeuvre de lacet inverse, c'est-à-dire dans l'autre sens, également en sur-commande. Pour ce faire, le pilote déplace l'autre pédale du palonnier de manière que le déplacement dudit palonnier surpasse la position de celui-ci correspondant à la position arrêtée de rotation maximale dans le sens de rotation opposé de la gouverne de direction.

Or, lors d'une telle inversion subite de la position de la gouverne de direction (de l'une des positions arrêtées de rotation maximale de la gouverne de direction à l'autre), l'aéronef subit des charges excessives au niveau de la dérive, liés à une variation trop rapide de l'amplitude de rotation de la gouverne de direction.

L'objet de la présente invention est donc de prévenir un tel risque pour l'aéronef lors d'une manoeuvre de lacet.

A cette fin, selon l'invention, le procédé pour le contrôle d'un aéronef en lacet, ledit aéronef comportant :
- une gouverne de direction articulée, pouvant tourner dans deux sens de rotation opposés entre une position aérodynamiquement neutre et une position arrêtée de rotation maximale ; et
- un organe de commande mobile, à la disposition du pilote de l'aéronef, pour la commande de ladite gouverne de direction, ledit organe de commande pouvant être déplacé dans deux directions opposées, l'une desdites directions étant associée à l'un des sens de rotation de ladite gouverne de direction, alors que la direction opposée est associée au sens de rotation opposé de ladite gouverne de direction, l'amplitude de la rotation de ladite gouverne de direction dépendant de l'amplitude du déplacement dudit organe de commande et les déplacements dudit organe de commande pouvant surpasser les positions de celui-ci correspondant respectivement auxdites positions arrêtées de rotation maximale de ladite gouverne de direction,
est remarquable en ce que, le pilote ayant préalablement déplacé ledit organe de commande de manière que le déplacement dudit organe surpasse ladite position de celui-ci correspondant à la position arrêtée de rotation maximale dans l'un desdits sens de rotation de ladite gouverne de direction, une alerte est déclenchée si, dans un premier intervalle de temps de durée prédéterminée, ledit pilote déplace ledit organe de commande de manière que le déplacement dudit organe surpasse ladite position de celui-ci correspondant à la position arrêtée de rotation maximale dans le sens de rotation opposé de ladite gouverne de direction, ladite durée étant déterminée de manière que, d'une part, il soit tenu compte de la nécessité de disposer d'une vitesse élevée de déclenchement d'alerte et, d'autre part, il puisse être déterminé de façon certaine qu'une inversion de sur-commande a été engagée.

Ainsi, grâce à l'invention, lorsque le pilote entame une inversion de sur-commande de la gouverne de direction, celui-ci est averti du risque encouru par une telle manoeuvre, ce qui permet de lui laisser la possibilité de décider s'il y a lieu de maintenir ses instructions d'inversion ou bien, au contraire, d'annuler ses instructions d'inversion en déplaçant l'organe de commande de façon à éviter une rotation complète de ladite gouverne de direction d'une position arrêtée de rotation maximale à l'autre.

De préférence, la durée du premier intervalle de temps est au plus égale à 3 secondes. II a été constaté qu'une durée comprise entre 1 et 2 secondes est un compromis satisfaisant entre, d'une part, la détection d'une inversion de commande de la gouverne de direction et, d'autre part, la vitesse de déclenchement de l'alerte.

Si le déplacement de l'organe de commande ne peut surpasser les positions de celui-ci correspondant respectivement aux positions arrêtées de rotation maximale de la gouverne de direction que lorsque la vitesse de l'aéronef est au moins égale à un seuil de vitesse de limitation, l'alerte peut n'être déclenchée que lorsque la vitesse dudit aéronef est au moins égale à un seuil de vitesse d'alerte lui-même supérieur au seuil de vitesse de limitation. Ainsi, l'alerte ne peut être déclenchée qu'à de grandes vitesses de l'aéronef, justement là où les risques encourus par une inversion de lacet sont les plus grands. Lorsque l'alerte est déclenchée, elle peut être maintenue durant un deuxième intervalle de temps de durée prédéterminée au moins approximativement égale à 5 secondes.

Par ailleurs, l'alerte peut être déclenchée sous la forme d'un signal visuel ou sonore à l'attention du pilote.

Pour la mise en oeuvre du procédé conforme à la présente invention, un dispositif pour le contrôle d'un aéronef en lacet, ledit aéronef comportant :- une gouverne de direction articulée, pouvant tourner dans deux sens de rotation opposés entre une position aérodynamiquement neutre et une position arrêtée de rotation maximale ; et - un organe de commande mobile, à la disposition du pilote de l'aéronef, pour la commande de ladite gouverne de direction, ledit organe de commande pouvant être déplacé dans deux directions opposées, l'une desdites directions étant associée à l'un des sens de rotation de ladite gouverne de direction, alors que la direction opposée est associée au sens de rotation opposé de ladite gouverne de direction, l'amplitude de la rotation de ladite gouverne de direction dépendant de l'amplitude du déplacement dudit organe de commande et les déplacements dudit organe de commande pouvant surpasser les positions de celui-ci correspondant respectivement auxdites positions arrêtées de rotation maximale de ladite gouverne de direction (5), est remarquable en ce qu'il comporte :- des moyens pour mesurer l'amplitude du déplacement dudit organe de commande ; et - des moyens pour déclencher une alerte si, le pilote ayant préalablement déplacé ledit organe de commande de manière que le déplacement dudit organe surpasse ladite position de celui-ci correspondant à la position arrêtée de rotation maximale dans l'un desdits sens de rotation de ladite gouverne de direction, dans un premier intervalle de temps de durée prédéterminée, ledit pilote déplace ledit organe de commande de manière que le déplacement dudit organe surpasse ladite position de celui-ci correspondant à la position arrêtée de rotation maximale dans le sens de rotation opposé de ladite gouverne de direction , ladite durée étant déterminée de manière que, d'une part, il soit tenu compte de la nécessité de disposer d'une vitesse élevée de déclenchement d'alerte et, d'autre part, il puisse être déterminé de façon certaine qu'une inversion de sur-commande a été engagée .
Les figures du dessin annexé feront bien comprendre comment l'invention peut être réalisée. Sur ces figures, des références identiques désignent des éléments semblables.
La figure 1 est une vue de face d'un avion civil gros porteur auquel peut s'appliquer la présente invention.
La figure 2 est une vue latérale de l'avion de la figure 1.
La figure 3 est un schéma synoptique d'un exemple de réalisation du dispositif de contrôle en lacet conforme à la présente invention, en vue de commander la gouverne de direction de l'aéronef des figures 1 et 2.
La figure 4 est une vue de dessus de la gouverne de direction de l'aéronef des figures 1 et 2.
La figure 5 est une vue de dessus de l'organe de commande mobile du dispositif de la figure 3
La figure 6 est un schéma synoptique d'un exemple de système d'alerte conforme à la présente invention, intégré au dispositif de contrôle en lacet de la figure 3.

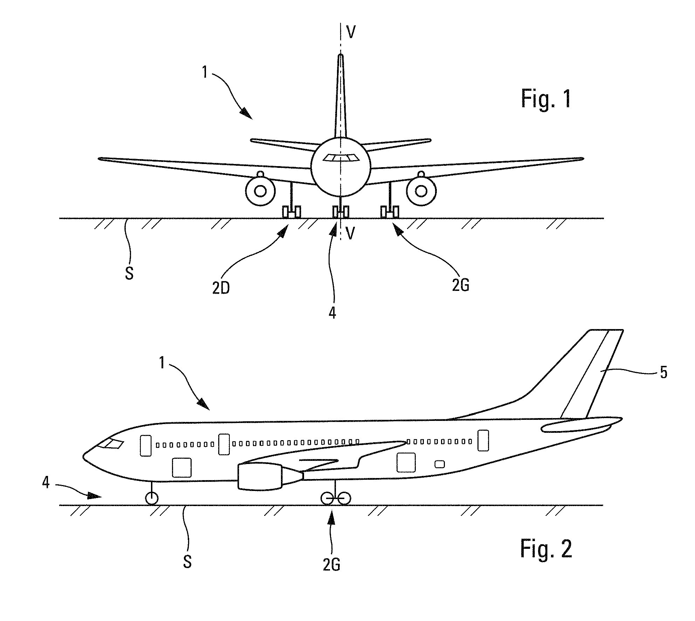

L'avion 1, montré schématiquement sur les figures 1 et 2 et roulant sur le sol S, comporte une paire de trains de roues principaux 2G et 2D, ainsi qu'un train avant directeur 4, disposé près du nez de l'avion 1 et une gouverne de direction 5 disposée à l'arrière dudit avion 1. Les trains de roues 2G et 2D, disposés respectivement à gauche et à droite de l'avion 1 , sont symétriques l'un de l'autre par rapport au plan vertical longitudinal médian V-V dudit avion 1.

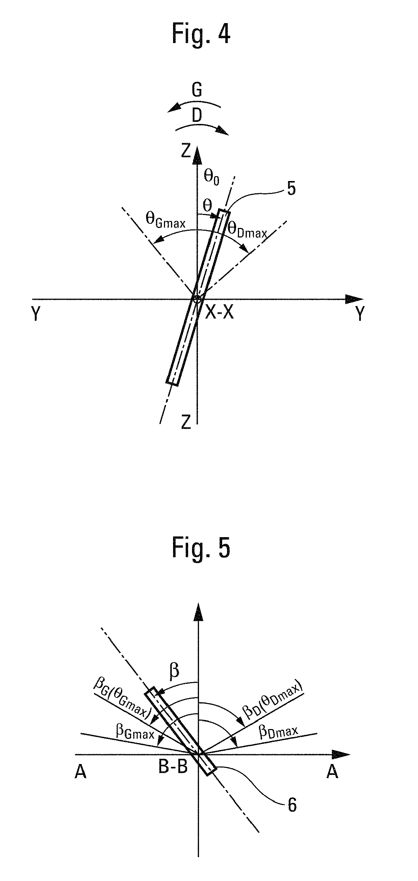

Comme représenté sur la figure 4, la gouverne de direction 5 est articulée et peut tourner dans deux sens de rotation opposés G (gauche) et D (droite), autour d'un axe vertical X-X appartenant au plan V-V. Sur cette figure, l'angle de rotation de la gouverne de direction 5, par rapport à un axe Z-Z appartenant à un plan (Y-Y, Z-Z) orthogonal à l'axe de rotation X-X de ladite gouverne, est désigné par la référence θ.

La gouverne de direction 5 est apte à pivoter, dans chacun des deux sens de rotation G et D, entre une position aérodynamiquement neutre, correspondant à un angle θo (de valeur nulle), et une position arrêtée de rotation maximale, désignée par θ_{Gmax} (de valeur positive) pour une rotation dans le sens G (vers la gauche) et par θ_{Dmax} (de valeur négative) pour une rotation dans le sens D (vers la droite). L'amplitude totale de rotation potentielle de la gouverne de direction 5 est donc égale à θ_{Gmax}- θ_{Dmax}.

On notera que, pour une gouverne de direction 5 symétrique, θ_{Gmax} est l'opposé de θ_{Dmax} et l'amplitude totale vaut donc 2.θ_{Gmax}.

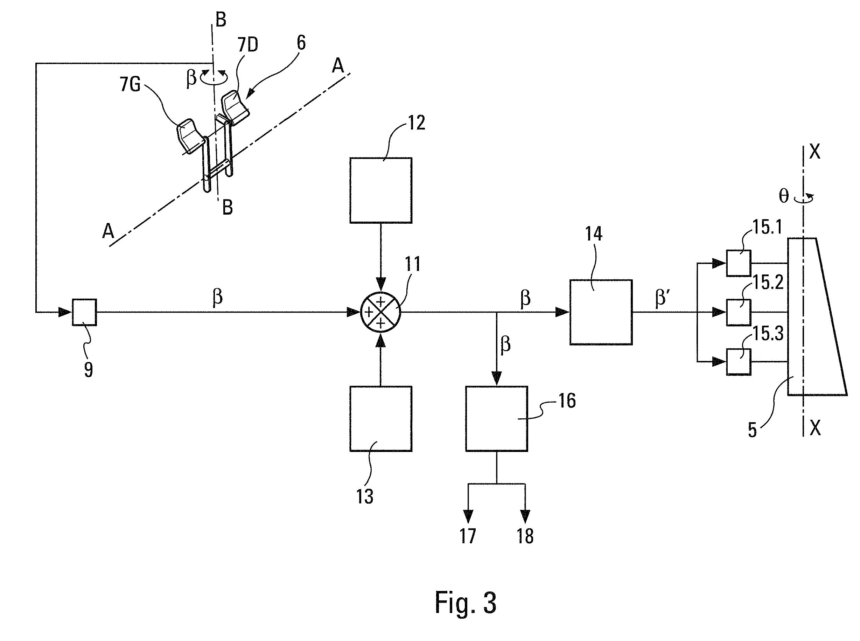

Comme représenté sur la figure 3, l'avion 1 est muni d'un organe de commande mobile 6 - ou palonnier - à la disposition du pilote dudit avion. De façon connue, l'organe de commande 6 est destiné, lorsque l'avion 1 roule sur le sol S ou est en vol, à commander la rotation de la gouverne de direction 5 dudit avion (voir la figure 4), autour de l'axe X-X, dans les deux sens G et D.

A cette fin, l'organe de commande 6 est apte à tourner autour d'un axe vertical B-B (considéré dans un référentiel (A-A, B-B, C-C) susceptible d'être différent du référentiel (X-X Y-Y, Z-Z) de la gouverne de direction 5), suivant deux sens de rotation opposés qui sont associés respectivement aux deux sens de rotation G et D de la gouverne de direction 5. L'organe de commande 6 est pour cela muni de deux pédales respectivement gauche 7G et droite 7D, un enfoncement de la pédale de gauche 7G étant apte à engendrer une rotation de l'organe de commande 6 dans le sens de rotation associé au sens de rotation vers la gauche G de la gouverne de direction 5, alors qu'un enfoncement de la pédale de droite 7D est apte à engendrer une rotation dudit organe de commande 6 dans le sens de rotation associé au sens de rotation vers la droite D de ladite gouverne de direction 5.

L'organe de commande mobile 6 peut ainsi pivoter (voir la figure 5) autour de l'axe B-B, entre une position (d'angle β nul) pour laquelle il n'est pas commandé de rotation de la gouverne de direction 5 et une position arrêtée (d'angle β égal à β_{Gmax}) pour laquelle la rotation dudit organe 6 est maximale. Entre ces deux positions, l'organe de commande mobile 6 passe par une position (d'angle β égal à β_{G}(θ_{Gmax})) pour laquelle la position arrêtée de rotation maximale θ_{Gmax} vers la gauche de la gouverne de direction 5 est atteinte.

De même, l'organe de commande mobile 6 peut pivoter autour de l'axe B-B, entre une position (d'angle β nul) pour laquelle il n'est pas commandé de rotation de la gouverne de direction 5 et une position arrêtée (d'angle β égal à β_{Dmax}) pour laquelle la rotation dudit organe 6 est maximale. Entre ces deux positions, l'organe de commande mobile 6 passe par une position (d'angle β égal à β_{D}(θ_{Dmax})) pour laquelle la position arrêtée de rotation maximale θ_{Dmax} vers la droite de la gouverne de direction 5 est atteinte.

On notera que, lorsque l'organe de commande 6 est symétrique, les valeurs de β_{Gmax} et β_{G}(θ_{Gmax}) sont respectivement opposées à celles de β_{Dmax} et à β_{D}(θₘₐₓ).

Le dispositif de contrôle en lacet de l'avion 1, conforme à la présente invention, est agencé entre l'organe de commande mobile 6 et la gouverne de direction 5 de manière que l'amplitude θ de la rotation de ladite gouverne de direction 5 dépende de l'amplitude β du déplacement dudit organe de commande mobile 6.

A cet effet, un transducteur 9 est associé à l'organe de commande 6, de façon à mesurer l'amplitude β de déplacement en rotation dudit organe. Ainsi, lorsque le pilote, avec son pied gauche (ou droit), appuie sur la pédale gauche 7G (ou droite 7D), le déplacement en translation de ladite pédale est transformée en un déplacement en rotation de l'organe de commande mobile 6, l'amplitude β de ce déplacement étant apte à être mesurée par le transducteur 9.

Cette commande β est adressée à un additionneur 11, auquel sont également adressés des ordres émanant d'un amortisseur de lacet 12 et d'un pilote automatique 13. Ainsi, lorsque l'amortisseur de lacet 12 est activé, il est tenu compte de la commande β adressée par l'organe de commande mobile 6 lorsque ledit amortisseur 12 procède à un amortissement de la manoeuvre de lacet de l'avion 1.

Cette commande β est ensuite adressée à un limiteur 14, dont la fonction est de limiter le déplacement en rotation β adressé par l'organe de commande mobile 6 à des valeurs respectivement β_{G}(θ_{Gmax}) et β_{D}(θ_{Dmax}) pour lesquelles sont atteintes les positions arrêtées de rotation maximale θ_{Gmax} et θ_{Dmax} de la gouverne de direction 5 dans les deux sens de rotation G et D, respectivement, en fonction de la vitesse V de l'avion 1, à partir d'un seuil de vitesse de limitation VminL préalablement déterminé (qui peut être par exemple égale à 165 noeuds).

Dans ce dernier cas, le déplacement de l'organe de commande 6 peut surpasser respectivement les positions β_{G}(θ_{Gmax}) et β_{D}(θ_{Dmax}) de celui-ci correspondant respectivement aux positions arrêtées de rotation maximale θ_{Gmax} et θ_{Dmax} de la gouverne de direction 5.

Plus précisément, le limiteur 14 est agencé de sorte que, lorsque l'avion 1 se déplace à une vitesse V inférieure à VminL, le limiteur 14 n'applique aucune limite de déplacement β_{G}(θ_{Gmax}) ou β_{D}(θ_{Dmax}). En revanche, lorsque la vitesse V de l'avion 1 est au moins égale à VminL, il est calculé de nouvelles valeurs de positions arrêtées de rotation maximale θ_{Gmax} et θ_{Dmax} pour la gouverne de direction, puis il est appliqué, au niveau du limiteur 14, des limites β_{G}(θ_{Gmax}) et β_{D}(θ_{Dmax}) de telle manière que :
- si la commande β est supérieure à la limite (positive) vers la gauche β_{G}(θ_{Gmax}) (pédale de gauche 7G enfoncée pour surpasser la position β_{G}(θ_{Gmax}) de celle-ci correspondant à la position arrêtée de rotation maximale θ_{Gmax} vers la gauche de la gouverne de direction 5), l'ordre de commande résultant β' est égal à β_{G}(θ_{Gmax}) ;
- si la commande β est inférieure à la limite (négative) vers la droite β_{D}(θ_{Dmax}) (pédale de droite 7D enfoncée pour surpasser la position β_{D}(θ_{Dmax}) de celle-ci correspondant à la position arrêtée de rotation maximale θ_{Dmax} vers la droite de la gouverne de direction 5), l'ordre de commande résultant β' est égal à β_{D}(θ_{Dmax}) ;
- sinon, l'ordre de commande résultant β' est égal à la commande β.

L'ordre de commande résultant β' est ensuite transmis à une pluralité de dispositifs d'actionnement 15.1, 15.2 et 15.3 de la gouverne de direction 5, afin d'ajuster l'amplitude de rotation θ de ladite gouverne, ladite amplitude de rotation θ étant une fonction croissante de l'ordre de commande résultant β' et, par conséquent, de la commande β.

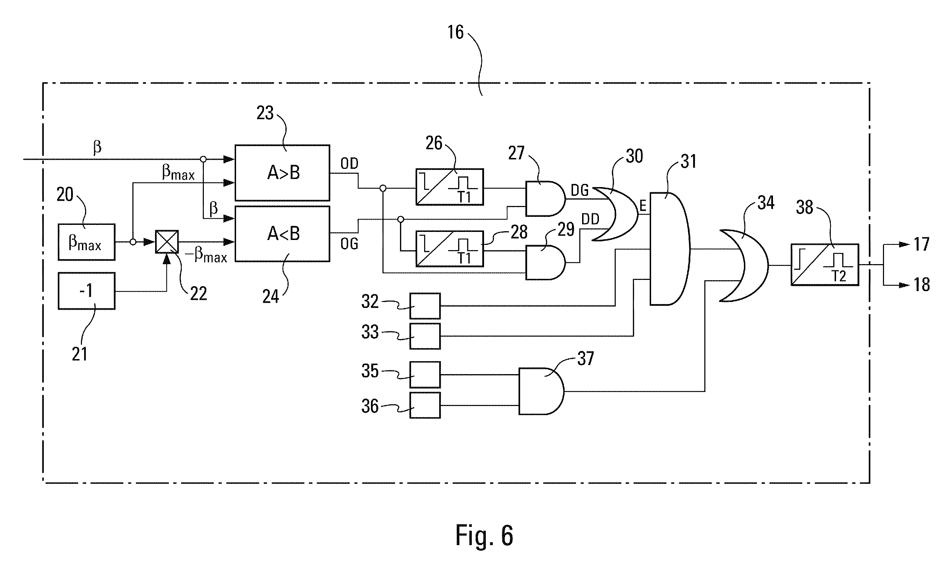

En plus d'être adressée au limiteur 14 décrit ci-dessus en référence à la figure 3, la commande β est également adressée au système d'alerte 16, représenté plus en détails sur la figure 6.

Ce système comporte tout d'abord, de façon analogue au limiteur 14, un calculateur 20 destiné à calculer les nouvelles valeurs de positions arrêtées de rotation maximale θ_{Gmax} et θ_{Dmax} de la gouverne de direction 5, en fonction de la vitesse V de l'avion 1 et du seuil de vitesse de limitation VminL préalablement déterminé. Les limites de déplacement β_{G}(θ_{Gmax}) et β_{D}(θ_{Dmax}) sont ensuite estimées à partir des valeurs θ_{Gmax} et θ_{Dmax} (par l'intermédiaire de la fonction croissante qui relie l'amplitude de la rotation θ de la gouverne de direction 5 à la commande β). Lorsque la vitesse V de l'avion 1 est supérieure au seuil de vitesse de limitation VminL, les limites de déplacement β_{G}(θ_{Gmax}) et β_{D}(θ_{Dmax}) sont des fractions respectivement des déplacements β_{Gmax} et β_{Dmax} de l'organe de commande mobile 6, respectivement dans les deux sens de rotation G et D, pour lesquels ces derniers sont en positions arrêtées, et le pilote peut donc surpasser lesdites limites de déplacement β_{G}(θ_{Gmax}) et β_{D}(θ_{Dmax}).

Les amplitudes respectivement de la commande β et des limites de déplacement β_{G}(θ_{Gmax}) et β_{D}(θₘₐₓ) sont adressées à deux comparateurs binaires 23 et 24, respectivement de types « A > B » et « A < B ». Dans l'exemple qui suit, on supposera que β_{G}(θ_{Gmax}) est égal à β_{D}(θ_{Dmax}) et l'on désignera ces deux valeurs par la référence βₘₐₓ.

Le premier comparateur binaire 23 compare les valeurs de β et βₘₐₓ et transmet en sortie un état OD, qui vaut '1' lorsque β est au moins égal à βmax et '0' sinon. Avant d'adresser la valeur de βmax au deuxième comparateur binaire 24, celle-ci βmax est transformée -βmax par des moyens 21 et 22 (multiplicateur) destinés à multiplier βmax par la valeur '-1'. Le deuxième comparateur binaire 24 compare les valeurs de β et -βₘₐₓ et transmet en sortie un état OG, qui vaut '1' lorsque β au plus égal à -βₘₐₓ et '0' sinon. Les états OG et OD permettent ainsi de déterminer si le pilote a déplacé l'un des organes de commande 6G ou 6D de manière que le déplacement dudit organe 6G ou 6D surpasse la position β_{G}(θ_{Gmax}) (-βₘₐₓ négatif) ou β_{D}(θ_{Dmax}) (βₘₐₓ positif) de celui-ci correspondant à la position arrêtée de rotation maximale θ_{Gmax} ou θ_{Dmax} dans l'un des sens de rotation G ou D de la gouverne de direction 5. En effet, le couple {OG,OD} vaut {0,1} lorsque β est au moins égal à βₘₐₓ (sur-commande de l'organe de commande gauche 6G), {1,O} lorsque β est au plus égal à -βₘₐₓ (sur-commande de l'organe de commande droite 6D) et {O,O} sinon.

Ces deux états OG et OD sont par la suite utilisés pour détecter une éventuelle inversion subite de sur-commande, c'est-à-dire le passage de la valeur β de -βmax à +βmax (ou inversement) dans un premier intervalle de temps de durée T1 prédéterminée.

A cette fin, il est prévu une première porte « ET » 27, adressant un état DG, et vers laquelle sont adressés, d'une part, l'état OG sans retard et, d'autre part, l'état OD avec un retard temporel égal à la durée T1 ci-dessus (par l'intermédiaire d'un retardateur 26).

De même, il est prévu une deuxième porte « ET » 29, adressant un état DD, et vers laquelle sont adressés, d'une part, l'état OG avec un retard temporel égal à la durée T1 ci-dessus (par l'intermédiaire d'un retardateur 28) et, d'autre part, l'état OD sans retard.

II s'ensuit, au niveau de ces deux portes « ET » 27 et 29, que :
- si dans l'intervalle de durée T1, β est passé de -βmax à +βmax, OG sans retard vaut '1' et OD avec retard vaut '1', donc DG vaut également '1' (inversion de sur-commande gauche-droite) ;
- si dans ledit intervalle de durée T1 , β est passé de +βmax à -βmax, OG avec retard vaut '1' et OD sans retard vaut '1', donc DD vaut également '1' (inversion de sur-commande droite-gauche);
- sinon, DG et DD valent tous deux '0'.

La porte « OU » 30, vers laquelle sont adressés les états DG et DD, permet alors d'adresser en sortie un état E qui vaut '1' lorsqu'une inversion de sur-commande a été détectée dans l'intervalle de temps de durée T1, et '0' sinon.

Pour que l'alerte soit déclenchée, il importe que l'état E soit égal à '1' et, de plus, qu'au niveau de la porte « ET » 34, que :
- la vitesse V de l'avion 1 soit au moins égale à un seuil de vitesse d'alerte VminA, qui est supérieure au seuil de vitesse de limitation VminL (et qui peut être par exemple égale à 220 noeuds lorsque VminL vaut 165 noeuds); cette détermination est effectuée au niveau du comparateur 32 qui compare la vitesse V de l'avion 1 audit seuil de vitesse d'alerte VminA ; et
- que le système d'alerte 16 soit activé au niveau de l'interrupteur 33.

Si toutes ces conditions sont réunies (système d'alerte 16 activé, vitesse V au moins égale à VminA, D dans l'état '1'), une alerte est déclenchée pendant un intervalle de temps de durée T2 préalablement déterminée (par exemple de l'ordre de 5 secondes), par l'intermédiaire d'un retardateur 38.

L'alerte ainsi déclenchée peut se manifester sous la forme :
- d'un signal visuel, émis par des moyens de signalisation 17 (tels qu'un écran, des diodes lumineuses, etc.) recevant l'ordre de déclenchement de ladite alerte ; ou
- d'un signal sonore, émis par des moyens d'émission sonore 18 recevant l'ordre de déclenchement de ladite alerte ; ou
- encore de toute autre type de signal adéquat.

La durée T1 est déterminée de manière que, d'une part, il soit tenu compte de la nécessité de disposer d'une vitesse élevée de déclenchement d'alerte et, d'autre part, il puisse être déterminé de façon certaine qu'une inversion de sur-commande a été engagée. A cet effet, une durée T1 au plus égale à 3 secondes - ou préférentiellement comprise entre 1 et 2 secondes - s'avère particulièrement adéquate.

Dans une forme de réalisation particulière du dispositif de contrôle en lacet selon l'invention, il peut être également prévu, dans le système d'alerte 16, des moyens pour déclencher manuellement ladite alerte, aux fins par exemple de tests de fonctionnement sans pour autant nécessiter de procéder effectivement à une inversion de manoeuvre en lacet. A cette fin, il peut être mis à disposition du pilote un bouton de test 35. Dès lors, si, simultanément, au niveau de la porte « ET » 37, le pilote appuie sur ce bouton test 35 et le train de roues avant 4 de l'avion 1 est comprimé (ce qui est déterminé par le module 36), l'alerte peut être déclenchée de la même façon que décrite ci-dessus en référence aux éléments 38, 17 et 18.

Ainsi, dans ce cas, par l'intermédiaire de la porte « OU » 34, le déclenchement de l'alerte peut être effectué soit manuellement, soit consécutivement à la détection d'une inversion de sur-commande.

## Revendications

1. Procédé pour le contrôle d'un aéronef (1) en lacet, ledit aéronef comportant :
- une gouverne de direction (5) articulée, pouvant tourner dans deux sens de rotation (G, D) opposés entre une position aérodynamiquement neutre (60) et une position arrêtée de rotation maximale (θGmax, θDmax) ; et
- un organe de commande (6) mobile, à la disposition du pilote de l'aéronef (1), pour la commande de ladite gouverne de direction (5), ledit organe de commande (6) pouvant être déplacé dans deux directions opposées (G, D), l'une desdites directions (G) étant associée à l'un (G) des sens de rotation de ladite gouverne de direction (5), alors que la direction opposée (D) est associée au sens de rotation opposé (D) de ladite gouverne de direction (5), l'amplitude (6) de la rotation de ladite gouverne de direction (5) dépendant de l'amplitude (f3) du déplacement dudit organe de commande (6) et les déplacements dudit organe de commande (6) pouvant surpasser les positions (βG(θGmax), βD(θDmax)) de celui-ci correspondant respectivement auxdites positions arrêtées de rotation maximale (θGmax, θDmax) de ladite gouverne de direction (5),**caractérisé en ce que**, le pilote ayant préalablement déplacé ledit organe de commande (6) de manière que le déplacement dudit organe (6) surpasse ladite position (βG(θGmax)) de celui-ci correspondant à la position arrêtée de rotation maximale (θGmax) dans l'un (G) desdits sens de rotation de ladite gouverne de direction (5), une alerte est déclenchée si, dans un premier intervalle de temps de durée (T1) prédéterminée, ledit pilote déplace ledit ' organe de commande (6) de manière que le déplacement dudit organe (6) surpasse ladite position (βD(θDmax)) de celui-ci correspondant à la position arrêtée de rotation maximale (θDmax) dans le sens de rotation opposé (D) de ladite gouverne de direction (5),
ladite durée (T1) étant déterminée de manière que, d'une part, il soit tenu compte de la nécessité de disposer d'une vitesse élevée de déclenchement d'alerte et, d'autre part, il puisse être déterminé de façon certaine qu'une inversion de sur-commande a été engagée.

2. Procédé selon la revendication 1,
**caractérisé en ce que** la durée (T1) du premier intervalle de temps est au plus égale à 3 secondes.

3. Procédé selon la revendication 2,
**caractérisé en ce que** la durée (T1) du premier intervalle de temps est comprise entre 1 et 2 secondes.

4. Procédé selon l'une des revendications précédentes, dans lequel le déplacement de l'organe de commande (6) ne peut surpasser les positions (β_{G}(θ_{Gmax}), β_{D}(θ_{Dmax})) de celui-ci correspondant respectivement aux positions arrêtées de rotation maximale (θ_{Gmax}, θ_{Dmax}) de la gouverne de direction (5) que lorsque la vitesse (V) de l'aéronef (1) est au moins égale à un seuil de vitesse de limitation (VminL),
**caractérisé en ce que** l'alerte n'est déclenchée que lorsque la vitesse (V) dudit aéronef (1) est au moins égale à un seuil de vitesse d'alerte (VminA) lui-même supérieur au seuil de vitesse de limitation (VminL).

5. Procédé selon l'une des revendications précédentes,
**caractérisé en ce que**, lorsque l'alerte est déclenchée, ladite alerte est maintenue durant un deuxième intervalle de temps de durée (T2) au moins approximativement égale à 5 secondes.

6. Procédé selon l'une des revendications précédentes,
**caractérisé en ce que** l'alerte est déclenchée sous la forme d'un signal visuel à l'attention du pilote.

7. Procédé selon l'une des revendications précédentes,
**caractérisé en ce que** l'alerte est déclenchée sous la forme d'un signal sonore à l'attention du pilote.

8. Dispositif pour le contrôle d'un aéronef (1) en lacet, ledit aéronef comportant :
- une gouverne de direction (5) articulée, pouvant tourner dans deux sens de rotation (G, D) opposés entre une position aérodynamiquement neutre (60) et une position arrêtée de rotation maximale (θGmax, Oomax) ; et
- un organe de commande (6) mobile, à la disposition du pilote de l'aéronef (1), pour la commande de ladite gouverne de direction (5), ledit organe de commande (6) pouvant être déplacé dans deux directions opposées (G, D), l'une (G) desdites directions étant associée à l'un (G) des sens de rotation de ladite gouverne de direction (5), alors que la direction opposée (D) est associée au sens de rotation opposé (D) de ladite gouverne de direction (5), l'amplitude (6) de la rotation de ladite gouverne de direction (5) dépendant de l'amplitude (13) du déplacement dudit organe de commande (6) et les déplacements dudit organe de commande (6) pouvant surpasser les positions (βG(θGmax), βD(θDmax)) de celui-ci correspondant respectivement auxdites positions arrêtées de rotation maximale (θGmax, θDmax) de ladite gouverne de direction (5),
ledit dispositif comportant des moyens (9) pour mesurer l'amplitude (13) du déplacement dudit organe de commande (6) ;
**caractérisé en ce qu'**il comporte, de plus :
- des moyens (16) pour déclencher une alerte si, le pilote ayant préalablement déplacé ledit organe de commande (6) de manière que le déplacement dudit organe (6) surpasse ladite position (β_{G}(θ_{Gmax})) de celui-ci correspondant à la position arrêtée de rotation maximale (θ_{Gmax}) dans l'un (G) desdits sens de rotation de ladite gouverne de direction (5), dans un premier intervalle de temps de durée (T1) prédéterminée, ledit pilote déplace ledit organe de commande (6) de manière que le déplacement dudit organe (6) surpasse ladite position (βD(θDmax)) de celui-ci correspondant à la position arrêtée de rotation maximale (θDmax) dans le sens de rotation opposé (D) de ladite gouverne de direction (5) , ladite durée (T1) étant déterminée de manière que, d'une part, il soit tenu compte de la nécessité de disposer d'une vitesse élevée de déclenchement d'alerte et, d'autre part, il puisse être déterminé de façon certaine qu'une inversion de sur-commande a été engagée .

## Patentansprüche

1. Verfahren zur Giersteuerung eines Luftfahrzeugs (1), wobei das Luftfahrzeug aufweist:
- ein angelenktes Seitenruder (5), das sich in zwei entgegengesetzten Drehrichtungen (G, D) zwischen einer aerodynamisch neutralen Position (θ₀) und einer arretierten Position maximaler Drehung (θGmax, θDmax) drehen kann; und
- ein bewegliches Steuerorgan (6), das dem Piloten des Luftfahrzeugs (1) zur Verfügung steht, zur Steuerung des Seitenruders (5), wobei das Steuerorgan (6) in zwei entgegengesetzten Richtungen (G, D) bewegt werden kann, wobei die eine dieser Richtungen (G) einer (G) der Drehrichtungen des Seitenruders (5) zugeordnet ist, während die entgegengesetzte Richtung (D) der entgegengesetzten Drehrichtung (D) des Seitenruders (5) zugeordnet ist, wobei die Größe (θ) der Drehung des Seitenruders (5) von der Größe (β) der Bewegung des Steuerorgans (6) abhängt und die Bewegungen des Steuerorgans (6) über die Positionen (βG(θGmax), βD(θDmax)) desselben hinaus erfolgen können, die jeweils einer der arretierten Positionen maximaler Drehung (θGmax, θDmax) des Seitenruders (5) entsprechen, **dadurch gekennzeichnet, dass**, wenn der Pilot zuvor das Steuerorgan (6) derart bewegt hat, dass die Bewegung des Organs (6) über die Position (βG(θGmax)) desselben hinaus erfolgt, die der arretierten Position maximaler Drehung (θGmax) in der einen (G) der Drehrichtungen des Seitenruders (5) entspricht, ein Alarm ausgelöst wird, falls in einem ersten Zeitintervall von vorbestimmter Dauer (T1) der Pilot das Steuerorgan (6) derart bewegt, dass die Bewegung des Organs (6) über die Position (βD(θDmax)) desselben hinaus erfolgt, die der arretierten Position maximaler Drehung (θDmax) in der entgegengesetzten Drehrichtung (D) des Seitenruders (5) entspricht, wobei die Dauer (T1) derart bestimmt wird, dass einerseits die Notwendigkeit berücksichtigt wird, über eine erhöhte Geschwindigkeit einer Alarmauslösung zu verfügen, und andererseits auf sichere Weise bestimmt werden kann, dass eine Umkehrung einer Übersteuerung veranlasst worden ist.

2. Verfahren nach Anspruch 1,
**dadurch gekennzeichnet, dass** die Dauer (T1) des ersten Zeitintervalls höchstens 3 Sekunden beträgt.

3. Verfahren nach Anspruch 2,
**dadurch gekennzeichnet, dass** die Dauer (T1) des ersten Zeitintervalls zwischen 1 und 2 Sekunden beträgt.

4. Verfahren nach einem der vorhergehenden Ansprüche, wobei die Bewegung des Steuerorgans (6) nur dann über die Positionen (βG(θGmax), βD(θDmax)) desselben, die jeweils einer der arretierten Positionen maximaler Drehung (θGmax, θDmax) des Seitenruders (5) entsprechen, hinaus erfolgen kann, wenn die Geschwindigkeit (V) des Luftfahrzeugs (1) mindestens gleich einem Begrenzungs-Geschwindigkeitsschwellenwert (VminL) ist,
**dadurch gekennzeichnet, dass** der Alarm nur dann ausgelöst wird, wenn die Geschwindigkeit (V) des Luftfahrzeugs (1) mindestens gleich einem Alarm-Geschwindigkeitsschwellenwert (VminA) ist, der seinerseits größer als der Begrenzungs-Geschwindigkeitsschwellenwert (VminL) ist.

5. Verfahren nach einem der vorhergehenden Ansprüche,
**dadurch gekennzeichnet, dass,** wenn der Alarm ausgelöst wird, der Alarm während eines zweiten Zeitintervalls mit einer Dauer (T2) aufrechterhalten wird, die mindestens etwa gleich 5 Sekunden ist.

6. Verfahren nach einem der vorhergehenden Ansprüche,
**dadurch gekennzeichnet, dass** der Alarm in der Form eines optischen Signals ausgelöst wird, das die Aufmerksamkeit des Piloten anzieht.

7. Verfahren nach einem der vorhergehenden Ansprüche,
**dadurch gekennzeichnet, dass** der Alarm in der Form eines akustischen Signals ausgelöst wird, das die Aufmerksamkeit des Piloten anzieht.

8. Vorrichtung zur Giersteuerung eines Luftfahrzeugs (1), wobei das Luftfahrzeug aufweist:
- ein angelenktes Seitenruder (5), das sich in zwei entgegengesetzten Drehrichtungen (G, D) zwischen einer aerodynamisch neutralen Position (60) und einer arretierten Position maximaler Drehung (θGmax, ODmax) drehen kann; und
- ein bewegliches Steuerorgan (6), das dem Piloten des Luftfahrzeugs (1) zur Verfügung steht, zur Steuerung des Seitenruders (5), wobei das Steuerorgan (6) in zwei entgegengesetzten Richtungen (G, D) bewegt werden kann, wobei die eine dieser Richtungen (G) einer (G) der Drehrichtungen des Seitenruders (5) zugeordnet ist, während die entgegengesetzte Richtung (D) der entgegengesetzten Drehrichtung (D) des Seitenruders (5) zugeordnet ist, wobei die Größe (θ) der Drehung des Seitenruders (5) von der Größe (β) der Bewegung des Steuerorgans (6) abhängt und die Bewegungen des Steuerorgans (6) über die Positionen (βG(θGmax), βD(θDmax)) desselben hinaus erfolgen können, die jeweils einer der arretierten Positionen maximaler Drehung (θGmax, θDmax) des Seitenruders (5) entsprechen,
wobei die Vorrichtung Mittel (9) zum Messen der Größe (β) der Bewegung des Steuerorgans (6) aufweist;
**dadurch gekennzeichnet, dass** sie außerdem aufweist:
Mittel (16) zum Auslösen eines Alarms, falls, wenn der Pilot zuvor das Steuerorgan (6) derart bewegt hat, dass die Bewegung des Organs (6) über die Position (βG(θGmax)) desselben hinaus erfolgt, die der arretierten Position maximaler Drehung (θGmax) in der einen (G) der Drehrichtungen des Seitenruders (5) entspricht, in einem ersten Zeitintervall von vorbestimmter Dauer (T1) der Pilot das Steuerorgan (6) derart bewegt, dass die Bewegung des Organs (6) über die Position (βD(θDmax)) desselben hinaus erfolgt, die der arretierten Position maximaler Drehung (θDmax) in der entgegengesetzten Drehrichtung (D) des Seitenruders (5) entspricht, wobei die Dauer (T1) derart bestimmt wird, dass einerseits die Notwendigkeit berücksichtigt wird, über eine erhöhte Geschwindigkeit einer Alarmauslösung zu verfügen, und andererseits auf sichere Weise bestimmt werden kann, dass eine Umkehrung einer Übersteuerung veranlasst worden ist.

## Claims

1. A method for yaw controlling of an aircraft (1), said aircraft comprising:
- a jointed rudder (5), being able to rotate in two opposite rotating directions (G, D) between an aerodynamically neutral position (θ₀) and a maximum rotation breakpoint (θ_{Gmax}, θ_{Dmax}); and
- a mobile commanding system (6), being available to the pilot of the aircraft (1), for the command of said rudder (5), said commanding system (6) being able to be moved in two opposite directions (G, D), one of said directions (G) being associated with one (G) of the rotating directions of said rudder (5), whereas the opposite direction (D) is associated with the opposite rotating direction (D) of said rudder (5), the rotation amplitude (θ) of said rudder (5) depending on the amplitude (β) of the movement of said commanding system (6) and the movements of said commanding system (6) being able to overcome the positions (β_{G}(θ_{Gmax}), β_{D}(θ_{Dmax})) of the latter corresponding respectively to said maximum rotation breakpoints (θ_{Gmax}, θ_{Dmax}) of said rudder (5),
**characterized in that** the pilot having beforehand moved said commanding system (6) so that the movement of said system (6) overcomes said position (β_{G} (θ_{Gmax})) of the latter corresponding to the maximum rotation breakpoint (θ_{Gmax}) in one (G) of said rotating directions of said rudder (5), an alert is released if, during a first time interval of a predetermined duration (T1), said pilot moves said commanding system (6) so that the movement of said system (6) overcomes said position (β_{D} (θ_{Dmax})) of the latter corresponding to the maximum rotation breakpoint (θ_{Dmax}) in the opposite rotating direction (D) of said rudder (5), said duration (T1) being determined so that, on the one hand, the need to have available a high releasing speed of the alert is taken into account and, on the other hand, it could be determined, for sure, that an inversion of over-command has been initiated.

2. The method according to claim 1,
**characterized in that** the duration (T1) of the first time interval is at most equal to 3 seconds.

3. The method according to claim 2,
**characterized in that** the duration (T1) of the first time interval ranges between 1 and 2 seconds.

4. The method according to one of preceding claims, wherein the movement of the commanding system (6) can only overcome the positions (β_{G}(θ_{Gmax}), β_{D}(θ_{Dmax})) of the latter corresponding respectively to the maximum rotation breakpoints (θ_{Gmax}, θ_{Dmax}) of the rudder (5) when the speed (V) of the aircraft (1) is at least equal to a limitation speed threshold (VminL),
**characterized in that** the alert is only released when the speed (V) of said aircraft (1) is at least equal to a alert speed threshold (VminA) being itself higher than the limitation speed threshold (VminL).

5. The method according to one of the preceding claims,
**characterized in that** when the alert is released, said alert is maintained during a second time interval of a duration (T2) at least approximately equal to 5 seconds.

6. The method according to one of the preceding claims,
**characterized in that** the alert is released as a visual signal to the attention of the pilot.

7. The method according to one of the preceding claims,
**characterized in that** the alert is released as a sound signal to the attention of the pilot.

8. A device for yaw controlling of an aircraft (1), said aircraft comprising:
- a jointed rudder (5), being able to rotate in two opposite rotating directions (G, D) between an aerodynamically neutral position (θ₀) and a maximum rotation breakpoint (θ_{Gmax}, θ_{Dmax}); and
- a mobile commanding system (6), being available to the pilot of the aircraft (1), for the command of said rudder (5), said commanding system (6) being able to be moved in two opposite directions (G, D), one of said directions (G) being associated with one (G) of the rotating directions of said rudder (5), whereas the opposite direction (D) is associated with the opposite rotating direction (D) of said rudder (5), the rotation amplitude (θ) of said rudder (5) depending on the amplitude (β) of the movement of said commanding system (6) and the movements of said commanding system (6) being able to overcome the positions (β_{G}(θ_{Gmax}), β_{D}(θ_{Dmax})) of the latter corresponding respectively to said maximum rotation breakpoints (θ_{Gmax}, θ_{Dmax}) of said rudder (5), said device comprising means (9) for measuring the amplitude (β) of the movement of said commanding system (6),
**characterized in that** said device further comprises:
- means (16) for releasing an alert if, the pilot having beforehand moved said commanding system (6) so that the movement of said system (6) overcomes said position (β_{G}(θ_{Gmax})) of the latter corresponding to the maximum rotation breakpoint in one (6) of said rotating directions of said rudder (5), in a first time interval of a predetermined duration (T1), said pilot moves said commanding system (6) so that the movement of said system (6) overcomes said position (β_{D}(θ_{Gmax}), β_{D}(θ_{Dmax})) of the latter corresponding to the maximum rotation breakpoint (θ_{Dmax}), in the opposite rotating direction (D) of said rudder, said duration (T1) being determined so that, on the one hand, the need to have available a high releasing speed of the alert is taken into account and, on the other hand, it could be determined, for sure, that an inversion of over-command has been initiated.
